# EUROPÄISCHE PATENTSCHRIFT

(11) **EP 3 578 345 B1**
(45) Veröffentlichungstag und Bekanntmachung des Hinweises auf die Patenterteilung: **05.11.2025**
(21) Anmeldenummer: 19178851.2
(22) Anmeldetag: 06.06.2019
(51) Int. Cl.: B29C 65/70, B29C 45/14, B29L 23/00

(54) **KUNSTSTOFF-COMPOSITE-BAUTEIL**
PLASTIC-COMPOSITE COMPONENT
COMPOSANT COMPOSITE EN MATIÈRE PLASTIQUE

(30) Priorität: 06.06.2018 CH 7272018
(43) Veröffentlichungstag der Anmeldung: 11.12.2019
(73) Patentinhaber: Kunststoffwerk AG Buchs, 9470 Buchs (CH)
(72) Erfinder: Rudolph, Martin, 9471 Buchs (CH); Barandun, Gion Andrea, 8640 Rapperswil (CH)
(74) Vertreter: Swisspat Riederer Hasler Patentanwälte AG

(56) Entgegenhaltungen:
- WO-A1-2015/108074
- WO-A2-2004/110738
- US-A1- 2017 204 937

## Beschreibung

Die Erfindung betrifft ein Kunststoff-Composite-Bauteil, insbesondere Rohr oder Ring in Composite-Bauweise, gemäss Oberbegriff von Anspruch 1.

### Stand der Technik

Der heutige Wettbewerbsdruck zwingt die Firmen, bestehende Herstellungsverfahren und Produkte nach Einsparmöglichkeiten zu untersuchen. Wo immer möglich, werden zeit- und arbeitsintensive Arbeitsschritte bei der Herstellung von komplexen Metallbauteilen dadurch umgangen, dass Produkte vereinfacht werden, um diese dann automatisiert fertigen zu können. Auch gibt es eine Tendenz, teurere Metallbauteile durch günstigere Kunststoffeile zu ersetzen. Ein Problem dabei ist jedoch, dass die günstigeren Kunststoffteile sehr oft die Anforderungen bezüglich Stabilität nicht zu erfüllen vermögen. Aus diesem Grunde müssen die Kunststoffteile in der Regel grössere Wandstärken aufweisen als die entsprechenden Metallbauteile.

US2017/0204937A1 (D1) offenbart eine Endlosband-Schlaufe mit einer im Wesentlichen gleichmässigen Breite. Die Enden des zu erstellenden Endlosbandes weisen ineinandergreifende Spleiss-Formationen auf. Für das Herstellen des Endlosbandes ist ein thermoplastisches Verbindungselement zwischen den freiliegenden Flächen, welche durch die Spleiss-Formation an den Enden des Endlosbandes erzeugt werden, angebracht. Definitionsgemäss sind die freiliegenden Flächen jene Flächen, welche bei einer Verbindung der beiden Enden abgedeckt werden und beinhalten die Stirnflächen der Spleiss-Formation bildenden Enden. Nach Ausrichten der Spleiss-Formation an beiden Enden des Endlosbandes wird eine nahtlose und unlösbare Verbindung durch thermische Bearbeitung des thermoplastischen Verbindungselement erzielt. Das thermoplastische Verbindungselement umfasst ein thermoplastisches Copolyester Elastomer. Das Endlosband kann eine Deckschicht aus Polymer oder thermoplastischem Elastomer aufweisen.

In der WO2015/108074A1 (D2) ist ein Endlosband beschrieben, welches eine Gummischicht mit einem darin eingebetteten Fasergelege aufweist. An diese Gummischicht ist ein Verstärkungsgewebe angebracht. Das Verstärkungsgewebe weist an einem ersten Ende fingerförmige Vorsprünge auf, welche am zweiten Ende jeweils korrespondierend zu jenen am ersten Ende angeordnet sind. Die fingerförmigen Vorsprünge beider Enden werden ineinandergreifend zusammengeführt. Vorgesehen ist, dass diese Verbindung der ineinandergreifenden Finger aufgeheizt und mithilfe einer Pressmaschine gepresst wird, um eine dauerhafte Verbindung zu erreichen. Eine zusätzliche Gummischicht kann auf einer Seite oder beiden Seiten des Endlosbandes aufgetragen werden. Für das Anbringen dieser zusätzlichen Gummischicht ist auch ein Aufheiz- und Pressvorgang des Endlosbandes durchzuführen, um eine Vulkanisation der jeweiligen Gummischichten zu erzielen.

WO2004/110738A2 (D3) offenbart ein Verfahren zum Verbinden von zwei FaserVerbund-Laminaten, wobei ein erster Satz von Zähnen in das Ende des ersten Faserverbundlaminats und ein zweiter Satz von Zähnen in das Ende des zweiten Faserverbundlaminats geschnitten ist, so dass der zweite Satz mit dem ersten Satz von Zähnen ineinandergreifend ausgerichtet ist. Für den Zusammenhalt der beiden Faserverbundlaminate wird an der Bindungslinie, welche durch das gegenseitige Ausrichten der Faserverbundlaminate entsteht, Klebemittel angeordnet und anschliessend ausgehärtet.

Bauteile, die einem grossen Druck standhalten müssen, werden oft mit Endlosfasern verstärkt. Sind beispielsweise Rohre einer hohen inneren Druckbelastung ausgesetzt, so ist der überwiegende Anteil der Fasern in Umfangsrichtung gewickelt. Das vorgängige Wickeln der Rohre ist jedoch zeitintensiv und daher teuer. Entsprechend besteht ein Bedarf nach Rohren, Ringen und ähnlichen Bauteilen, die zwar eine hohe Druckbelastung widerstehen können, jedoch kosengünstig hergestellt werden können.

### Aufgabe der Erfindung

Es ist deshalb ein Ziel der vorliegenden Erfindung, ein Bauteil zur Verfügung zu stellen, das Metallbauteile zu ersetzen vermag. Ein weiteres Ziel ist es, ein Bauteil zur Verfügung zu stellen, das hohen Drücken standhalten kann. Insbesondere ist es ein Ziel, ein Rohr oder einen Ring zur Verfügung zu stellen, das resp. der einem möglichst hohen Berstdruck standhalten kann.

### Beschreibung

Erfindungsgemäss werden die vorerwähnten Ziele durch die Merkmale von Anspruch 1 realisiert. Vorteilhafte Weiterbildungen sind in den Unteransprüchen definiert.

Die Erfindung betrifft ein Kunststoff-Composite-Bauteil, insbesondere Rohr oder Ring in Composite-Bauweise, mit einer Wand, die mindestens zwei Schichten oder Lagen aufweist, nämlich eine erste Schicht mit einem Fasergelege oder Fasergewebe, wobei zwischen zwei Enden des Fasergeleges oder Fasergewebes eine Stossverbindung definiert ist, und eine zweite Schicht, die mit der ersten Schicht vollflächig verbunden ist. Dabei kann die Stossverbindung zwischen zwei Kanten von verschiedenen Fasergelegen oder Fasergeweben im Falle eines nicht-runden Bauteils oder zwischen den Enden des gleichen Fasergeleges oder Fasergewebes im Falle eines runden Bauteils gebildet sein und ist als keil- oder fingerzinkenähnliche Stossverbindung ausgestaltet. Die keil- oder fingerzinkenähnliche Stossverbindung zeichnet sich dadurch aus, dass die beiden, die Stossverbindungen bildenden Enden des Faser-Halbzeugs fingerähnliche Vorsprünge aufweisen, die ineinandergreifen. Dies hat den Vorteil, dass die erfindungsgemässe Stossverbindung eine wesentlich grössere Zugfestigkeit aufweist als solche mit einer geraden Stossverbindung. Das Fasergelege oder Fasergewebe ist dabei als vorgefertigtes Halbzeug eingesetzt. Unter einem vorgefertigten Halbzeug soll im Rahmen der Erfindung verstanden werden, dass die Fasergelege oder Fasergewebe so zugeschnitten und/oder geformt sind, dass zwei Kanten aneinanderstossen oder sehr nah beieinander liegen, d.h. durch einen Spalt von 1mm oder weniger voneinander getrennt sind.

Erfindungsgemäss ist das Kunststoff-Composite-Bauteil dadurch charakterisiert, dass die im Fasergelege oder Fasergewebe eingebetteten Endlosfasern mindestens teilweise senkrecht zur generellen Richtung der Stossverbindung zwischen den beiden, die Stossverbindung bildenden Enden des Fasergeleges oder Fasergewebes verlaufen. Unter teilweise ist ein Anteil der Anzahl an Endlosfasern von mindestens 60% gegenüber aller im Fasergelege oder Fasergewebe vorhandenen Endlosfasern zu verstehen, vorzugsweise ist dieser Anteil mindestens 70%. Mehr als 60% der im Fasergelege oder Fasergewebe eingebetteten Endlosfasern verlaufen im Wesentlichen parallel zueinander und senkrecht zur generellen Richtung der Stossverbindung.

Vorteilhaft ist die Länge der Stossverbindung im Vergleich zu einer geraden Stossverbindung um 100%, vorzugsweise um 200% und besonders bevorzugt um mehr als 300% verlängert. Je länger die Stossverbindung, umso mehr lässt sich die Zugefestigkeit senkrecht zur Stossverbindung vergrössern.

Gemäss einer besonders bevorzugten Ausführungsform ist das Halbzeug ein in einer Kunststoffmatrix eingebettetes Fasergelege oder Fasergewebe. Dies hat den Vorteil, dass im Handel erhältliche, sog. Organobleche verwendet werden können.

Zweckmässigerweise beträgt der gewichtsmässige Faseranteil in einem derartigen Halbzeug zwischen 30% und 90%, vorzugsweise zwischen 40% und 80% und besonders bevorzugt zwischen 50% und 70%. Solche Halbzeuge sind entsprechend sehr dünn und tragen nur wenig in der Dicke auf.

Grundsätzlich denkbar ist jedoch auch, dass das Halbzeug ein auf einem Trägermaterial angeordnetes Fasergelege oder Fasergewebe ist. Alternativ kann das eingesetzte Fasergelege auch durch eine Anzahl Schussfäden zusammengehalten sein derart, dass es sich zuschneiden und Händeln lässt.

Herstellungstechnisch wird das entsprechend zugeschnittene Faser-Halbzeug in eine Spritzgiessform eingelegt und dann umspritzt. Im Falle von in einer Kunststoffmatrix eingebetteten Faser Halbzeugen wird die zweite Schicht in einer Spritzgiessvorrichtung an die erste Schicht mit dem Halbzeug angespritzt.

Vorteilhaft werden solche Fasergelege- oder Fasergewebe eingesetzt, bei denen mehr als 75%, vorzugsweise mehr 90% der Anzahl an im Fasergelege oder Fasergewebe eingebetteten Endlosfasern im Wesentlichen parallel zueinander und senkrecht zur generellen Richtung der Stossverbindung verlaufen. Je mehr Fasern senkrecht zur generellen Richtung der Stossverbindung verlaufen, umso mehr kann die Zugfestigkeit verbessert werden.

Eine Hauptanwendung von erfindungsgemäss zugeschnittenen Faser-Halbzeugen ist die Herstellung von Rohren oder Ringen, obwohl die vorgeschlagenen keil- oder fingerzinkenähnliche Stossverbindungen sich grundsätzlich auch auch bei ebenen Bauteilen realisieren lassen. Dabei ist vorgesehen, dass die Elastizität der aus der erfindungsgemässen zugeschnittenen Faser-Halbzeugen bestehenden Bauteile eine plastische Deformation dieser nicht zulässt. Ein aus der erfindungsgemässen zugeschnittenen Faser-Halbzeugen bestehendes Bauteil weist eine steife Konstruktion und einen grossen Widerstand gegenüber elastischer Verformung auf. Gleichzeitig lässt sich ein solches Bauteil im nichtbefestigten Zustand nicht bereits aufgrund der eigenen Gewichtskraft durchbiegen.

Vorteilhaft bildet die erste Schicht mit dem Halbzeug die äussere Schicht der Wand eines rohr- oder hülsenförmigen Bauteils. Dies hat den Vorteil, dass das Faser-Halbzeug, insbesondere Fasergelege oder Fasergewebe, die bereits in einer Kunststoffmatrix eingebettet sind, in einer Spritzgiessform eingelegt werden kann. Es versteht sich von selbst, dass die Fasern dann in Umfangsrichtung zwischen den beiden, die Stossverbindung bildenden Enden des Fasergeleges oder Fasergewebes verlaufen.

Vorteilhaft weist das Halbzeug eine Stärke zwischen 0.05 und 1 mm, vorzugsweise zwischen 0.1 und 0.5 mm und besonders bevorzugt zwischen 0.15 und 0.4 mm auf. Bewährt haben sich Stärken zwischen 0.2 und 0.3mm.

Gemäss einer bevorzugten Ausführungsform der Erfindung ist als Faser-Halbzeug ein Organoblech eingesetzt. Organobleche sind in unterschiedlichen Ausführungsformen im Handel erhältlich.

Vorteilhaft ist die Zugfestigkeit senkrecht zur Stossverbindung gegenüber einem Bauteil mit einer im Wesentlichen geraden Stossverbindung um wenigstens 30 Prozent, vorzugsweise um wenigstens 50 Prozent und besonders bevorzugt um wenigstens 70 Prozent erhöht. Als Fasern sind vorzugsweise Glas-, Kohlestoff-, Polyamid oder Aramidfasern eingesetzt.

Offenbart ist auch ein Verfahren zum Herstellen eines mindestens zweischichtigen Kunststoff-Composite-Bauteil, insbesondere Rohr oder Ring in Composite-Bauweise, mit folgenden Verfahrensschritten,
**dadurch gekennzeichnet,**
a Bereitstellen eines Fasergeleges- oder Fasergewebes,
b Ausschneiden eines Faser-Halbzeugs aus dem Fasergelege- oder Fasergewebe, wobei an zwei einanander gegenüberliegenden Enden abstehende und voneinander beabstandete Finger derart ausgebildet werden, dass diese ineinander greifen können, wenn das Faser-Halbzeug in eine Spritzgiessform eingelegt wird,
c Einlegen des Faserhalbzeugs in eine Spritzgiessform derart, dass die Finger ineinander greifen, und
d Umspritzen des Faserhalbzeugs mit einem aushärtbaren Kunststoff.

Dieses Verfahren hat den Vorteil, dass es wesentlich weniger aufwendig ist, als wenn ein Rohr, Ring oder Hülse mit Endlosfasern zuerst gewickelt werden müste.

Grundsätzlich kann anstelle der Verfahrensschritte a und b das Faser-Halbzeug auch aus einem grösseren Organoblech ausgeschnitten und dann thermisch entsprechend der zu verwendenden Spritzgiessform vorgeformt werden. An das in eine Spritzgiessform eingelegte Organoblech kann dann eine weitere Kunststoffschicht in einer Spritzgiessvorrichtung angespritzt werden, wobei die Kunststoffmatrix des Fasertapes und der anzuspritzende Kunststoff miteinander kompatibel sein müssen und bevorzugt zur gleichen Kunststoffgruppe gehören.

Vorteilhaft ist als Kunststoff ein Thermoplast aus der Gruppe der Polycarbonate, Polyamide, Polyphenylensulfide (PPS), Polysulfone, Polyethylene, Polybutylenterephthalaet oder Polyetheretherketone eingesetzt, wobei Polyamid 6 oder Polyamid 66 bevorzugt ist.

Ein unabhängiger Aspekt der Erfindung ist das Erstellen der Stossverbindung und das Verbinden der zwei Schichten ohne Verwendung eines weiteren Elements, wie z.Bsp. eines separaten Verbindungselements. Dies beinhaltet unter anderem den Verzicht auf ein zusätzliches Klebemittel.

Ein Ausführungsbeispiel der Erfindung wird nun unter Bezugnahme auf die nachfolgenden Figuren näher im Detail beschrieben. Es zeigt:
- Figur 1:: Eine Seitenansicht eines erfindungsgemässen Kunststoff-Composite-Bauteils in Gestalt einer Hülse oder eines Rohrabschnitts mit einer fingerzinken- resp. wellenförmigen Stossverbindung;
- Figur 2:: Eine Stirnansicht der Hülse von Fig. 1;
- Figur 3:: Ein zugeschnittenes und geformtes, thermoplastisches Faserhalbzeug für die Verwendung im Kunststoff-Composite-Bauteil gemäss Fig. 1., das zur besseren Veranschaulichung der Stossverbindung auseinandergespreizt ist.

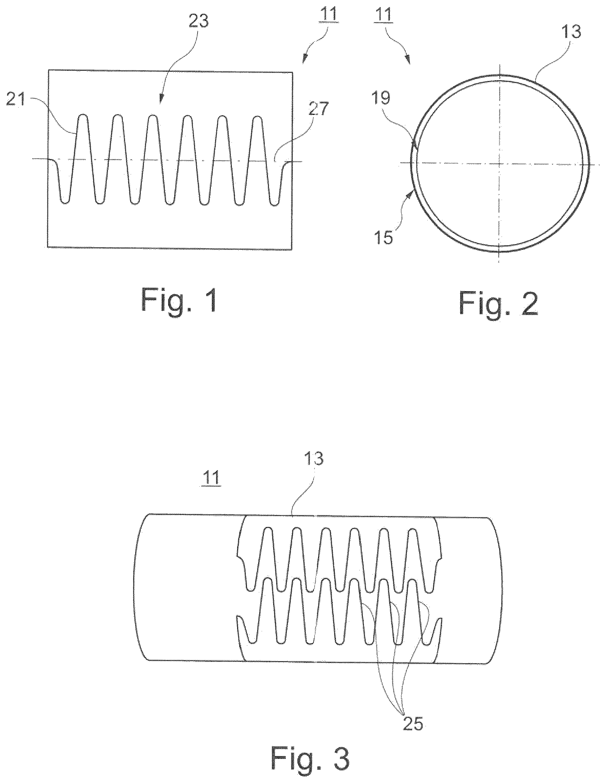

Die Figuren 1 bis 3 zeigen ein erfindungsgemässes Kunststoff-Composite-Bauteil 11 in der Gestalt eines kreiszylinderförmigen Rohrabschnitts resp. einer kreiszylinderförmigen Hülse 13. Die Hülse 13 umfasst eine äussere erste Schicht 15 mit einem Fasergelege oder Fasergewebe und eine zweite Schicht 19, die vollflächig mit der ersten Schicht 15 verbunden ist. Im Unterschied zu einem gewickelten Rohr weist das Fasergelege oder Fasergewebe einen Verbindungsstoss 21 auf, d.h. die Endlosfasern weisen in Umfangsrichtung eine Bruchstelle auf. Diese Bruchstelle ist herstellungsbedingt, da die Endlosfasern nicht gewickelt werden und ein entsprechender Formling hergestellt wird, sondern ein Faser-Halbzeug aus einem in der Regel grösseren Fasergelege oder Fasergewebe ausgeschtitten und verwendet wird. Ein Nachteil dieser Technik ist, dass entlang des Verbindungsstosses eine Schwachstelle des Bauteils besteht. Wird das Bauteil nämlich einem hohen Druck ausgesetzt, dann wird es entlang des Verbindungsstosses bersten.

Um diesen Nachteil zu mildern, ist erfindungsgemäss vorgeschlagen, eine keil- oder fingerzinkenähnliche Stossverbindung 23 mit fingerähnlichen Vorsprüngen 25 auszubilden. Dies hat den Vorteil, dass die Länge der eigentlichen Stossverbindung auf ein Mehrfaches einer geraden Stossverbindung, vorliegend würde eine solche in Längsrichtung 25 der Hülse verlaufen, vergrössert wird. Überraschenderweise kann damit die Zugfestigkeit senkrecht zur generellen Richtung der Stossverbindung um mehr als 50% erhöht werden. Bei einem Rohr, dass mit einem hohen Innendruck beaufschlagt wird, äussert sich diese in einem wesentlich erhöhten Berstdruck.

Wenn die erste Schicht mit dem Fasergelege oder Fasergewebe eine bestimmte erste Stärke aufweist, dann hat die zweite Schicht eine Stärke zwischen fünf- und zwanzigfachen und besonders bevorzugt zwischen dem sieben- und zwölffachen der ersten Schicht.

Die Erfindung betrifft ein Kunststoff-Composite-Bauteil, insbesondere Rohr oder Ring in Composite-Bauweise, mit einer Wand mit einer ersten Schicht, in der ein Halbzeug mit einem Fasergelege oder Fasergewebe eingesetzt ist, wobei zwischen zwei Enden des Fasergeleges oder Fasergewebes eine Stossverbindung definiert ist. Eine zweite Schicht ist mit der ersten Schicht vollflächig verbunden ist. Das Composite-Bauteil ist dadurch gekennzeichnt, dass die Stossverbindung als keil- oder fingerzinkenähnliche Stossverbindung ausgestaltet ist. Das Bauteil weist im Vergleich zu Bauteilen mit einer geraden Stossverbingung eine markant höhere Zugefestigkeit auf. Im Falle von Rohren ist der Berstdruck gemessen gemäss DIN ISO 2758 um mindestens 50% höher als bei Rohren, die eine Fasergelege oder Fasergewebe mit einer geraden Stossverbindung aufweisen.

### Legende

- 11: Kunststoff-Composite-Bauteil
- 13: Hülse resp. Rohrabschnitt
- 15: erste Schicht
- 19: zweite Schicht
- 21: Verbindungsstoss
- 23: keil- oder fingerzinkenähnliche Stossverbindung
- 25: Fingerähnliche Vorsprünge
- 27: Längsrichtung

## Patentansprüche

1. Kunststoff-Composite-Bauteil (11), insbesondere Rohr oder Ring in Composite-Bauweise, mit einer Wand mit einer ersten Schicht (15), in der ein Halbzeug mit einem Fasergelege oder Fasergewebe eingesetzt ist, wobei zwischen zwei Enden des Fasergeleges oder Fasergewebes eine Stossverbindung (21) definiert ist, und einer zweiten Schicht (19), die mit der ersten Schicht (15) verbunden ist, wobei die Stossverbindung (21) als keil- oder fingerzinkenähnliche Stossverbindung ausgestaltet ist und
die im Fasergelege oder Fasergewebe eingebetteten Endlosfasern mindestens teilweise senkrecht zur generellen Richtung der Stossverbindung zwischen den beiden, die Stossverbindung bildenden Enden des Fasergeleges oder Fasergewebes verlaufen,
**dadurch gekennzeichnet,**
**dass** mehr als 60% der im Fasergelege oder Fasergewebe eingebetteten Endlosfasern im Wesentlichen parallel zueinander und senkrecht zur generellen Richtung der Stossverbindung verlaufen.

2. Composite-Bauteil nach Anspruch 1, **dadurch gekennzeichnet, dass** die Länge der Stossverbindung (21) im Vergleich zu einer geraden Stossverbindung um 100%, vorzugsweise um 200% und besonders bevorzugt um mehr als 300% verlängert ist.

3. Composite-Bauteil nach Anspruch 1 oder 2, **dadurch gekennzeichnet, dass** das Halbzeug ein in einer Kunststoffmatrix eingebettetes Fasergelege oder Fasergewebe ist.

4. Composite-Bauteil nach einem der Ansprüche 1 bis 3, **dadurch gekennzeichnet, dass** der gewichtsmässige Faseranteil im eingesetzten Halbzeug zwischen 30% und 90%, vorzugsweise zwischen 40% und 80% und besonders bevorzugt zwischen 50% und 70% beträgt.

5. Composite-Bauteil nach Anspruch 1 oder 2, **dadurch gekennzeichnet, dass** das Halbzeug ein auf einem Trägermaterial angeordnetes Fasergelege oder Fasergewebe ist.

6. Composite-Bauteil nach einem der Ansprüche 1 bis 4, **dadurch gekennzeichnet, dass** das eingesetzte Fasergelege durch eine Anzahl Schussfäden zusammengehalten ist.

7. Composite-Bauteil nach einem der Ansprüche 1 bis 6, **dadurch gekennzeichnet, dass** die zweite Schicht (19) in einer Spritzgiessvorrichtung an die erste Schicht (15) mit dem Halbzeug angespritzt ist.

8. Composite-Bauteil nach einem der Ansprüche 1 bis 7, **dadurch gekennzeichnet, dass** mehr als 75%, vorzugsweise mehr als 90% der im Fasergelege oder Fasergewebe eingebetteten Endlosfasern im Wesentlichen parallel zueinander und senkrecht zur generellen Richtung der Stossverbindung verlaufen.

9. Composite-Bauteil nach einem der Ansprüche 1 bis 8, **dadurch gekennzeichnet, dass** das Kunststoff-Composite-Bauteil ein Rohr (13) oder Ring ist.

10. Composite-Bauteil nach Anspruch 8, **dadurch gekennzeichnet, dass** die erste Schicht (15) mit dem Halbzeug die äussere Schicht der Wand bildet.

11. Composite-Bauteil nach einem der Ansprüche 1 bis 10, **dadurch gekennzeichnet, dass** als Fasern Glas-, Aramid oder Kohlestofffasern, wobei Kohlestofffasern bevorzugt sind, eingesetzt sind.

12. Composite-Bauteil nach einem der Ansprüche 1 bis 11, **dadurch gekennzeichnet, dass** das Halbzeug eine Stärke zwischen 0.05 und 1 mm, vorzugsweise zwischen 0.1 und 0.5 mm und besonders bevorzugt zwischen 0.15 und 0.4 mm aufweist.

13. Composite-Bauteil nach einem der Ansprüche 1 bis 12, **dadurch gekennzeichnet, dass** das Halbzeug ein Organoblech ist.

14. Composite-Bauteil nach einem der Ansprüche 1 bis 13, **dadurch gekennzeichnet, dass** die Zugfestigkeit senkrecht zur Stossverbindung (21) gegenüber einem Bauteil mit einer im Wesentlichen geraden Stossverbindung um wenigstens 30 Prozent, vorzugsweise um wenigstens 50 Prozent und besonders bevorzugt um wenigstens 70 Prozent erhöht ist.

## Claims

1. A plastic composite component (11), in particular a tube or ring of composite construction, with a wall with a first layer (15) in which a semi-finished product with a fibre structure or fibre fabric is utilised, wherein a butt joint (21) is defined between two ends of the fibre structure or fibre fabric, and a second layer (19) which is connected to the first layer (15), wherein the butt joint (21) is formed as a wedge-like or interlocking finger-like butt joint, and
at least portions of the continuous fibres embedded in the fibre structure or fibre fabric extend perpendicular to the general direction of the butt joint between the two ends of the fibre structure or fibre fabric forming the butt joint,
**characterized in that**
more than 60% of the continuous fibres embedded in the fibre structure or fibre fabric extend substantially parallel with respect to each other and perpendicular to the general direction of the butt joint.

2. The composite component as claimed in claim 1, **characterized in that** the length of the butt joint (21) is extended by 100%, preferably by 200% and particularly preferably by more than 300% compared with a straight butt joint.

3. The composite component as claimed in claim 1 or claim 2, **characterized in that** the semi-finished product is a fibre structure or fibre fabric embedded in a plastic matrix.

4. The composite component as claimed in one of claims 1 to 3, **characterized in that** the proportion by weight of fibres in the semi-finished product which is utilised is between 30% and 90%, preferably between 40% and 80% and particularly preferably between 50% and 70%.

5. The composite component as claimed in claim 1 or claim 2, **characterized in that** the semi-finished product is a fibre structure or fibre fabric disposed on a carrier material.

6. The composite component as claimed in one of claims 1 to 4, **characterized in that** the fibre structure which is utilised is cohered by a number of weft threads.

7. The composite component as claimed in one of claims 1 to 6, **characterized in that** the second layer (19) is moulded onto the first layer (15) with the semi-finished product in an injection moulding device.

8. The composite component as claimed in one of claims 1 to 7, **characterized in that** more than 75%, preferably more than 90% of the continuous fibres embedded in the fibre structure or fibre fabric extend substantially parallel to each other and perpendicular to the general direction of the butt joint.

9. The composite component as claimed in one of claims 1 to 8, **characterized in that** the plastic composite component is a tube (13) or ring.

10. The composite component as claimed in claim 8, **characterized in that** the first layer (15) with the semi-finished product forms the outer layer of the wall.

11. The composite component as claimed in one of claims 1 to 10, **characterized in that** glass fibres, aramid fibres or carbon fibres, wherein carbon fibres are preferred, are utilised as the fibres.

12. The composite component as claimed in one of claims 1 to 11, **characterized in that** the semi-finished product has a thickness of between 0.05 and 1 mm, preferably between 0.1 and 0.5 mm and particularly preferably between 0.15 and 0.4 mm.

13. The composite component as claimed in one of claims 1 to 12, **characterized in that** the semi-finished product is an organometallic sheet.

14. The composite component as claimed in one of claims 1 to 13, **characterized in that** the tensile strength perpendicular to the butt joint (21) is increased by at least 30 percent, preferably by at least 50 percent and particularly preferably by at least 70 percent compared with a component with a substantially straight butt joint.

## Revendications

1. Pièce (11) en matière plastique composite, s'agissant notamment d'un tube ou d'un anneau à structure composite, laquelle comporte une paroi pourvue d'une première couche (15) dans laquelle est intégré un produit semi-fini comportant un non-tissé de fibres ou un tissu de fibres, un assemblage bout-à-bout (21) étant défini entre deux extrémités du non-tissé de fibres ou tissu de fibres, et d'une seconde couche (19) qui est liée à la première couche (15), l'assemblage bout-à-bout (21) étant réalisé sous forme d'un assemblage bout-à-bout ressemblant à des queues ou des doigts, et
les fibres continues incorporées dans le non-tissé de fibres ou le tissu de fibres s'étendant au moins en partie perpendiculairement à l'orientation générale de l'assemblage bout-à-bout entre les deux extrémités du non-tissé de fibres ou du tissu de fibres qui forment ledit assemblage bout-à-bout,
**caractérisée en ce que**
plus de 60 % des fibres continues incorporées dans le non-tissé de fibres ou le tissu de fibres s'étendant sensiblement de manière à être parallèles les unes aux autres et perpendiculaires à l'orientation générale de l'assemblage bout-à-bout.

2. Pièce en composite selon la revendication 1, **caractérisée en ce que** la longueur de l'assemblage bout-à-bout (21) est augmentée de 100 %, préférentiellement de 200% et, avec une préférence particulière, de 300 % par rapport à un assemblage bout-à-bout droit.

3. Pièce en composite selon les revendications 1 ou 2, **caractérisée en ce que** ledit produit semi-fini est un non-tissé de fibres ou un tissu de fibres incorporé dans une matrice de matière plastique.

4. Pièce en composite selon l'une des revendications 1 à 3, **caractérisée en ce que** la proportion en poids des fibres dans ledit produit semi-fini intégré est comprise entre 30 % et 90 %, préférentiellement entre 40 % et 80 % et, avec une préférence particulière, entre 50 % et 70 %.

5. Pièce en composite selon les revendications 1 ou 2, **caractérisée en ce que** ledit produit semi-fini est un non-tissé de fibres ou un tissu de fibres disposé sur un matériau support.

6. Pièce en composite selon l'une des revendications 1 à 4, **caractérisée en ce que** le non-tissé de fibres intégré est maintenu ensemble par un certain nombre de fils de trame.

7. Pièce en composite selon l'une des revendications 1 à 6, **caractérisée en ce que** la seconde couche (19) est appliquée par injection, dans un dispositif de moulage par injection, sur la première couche (15) comportant ledit produit semi-fini.

8. Pièce en composite selon l'une des revendications 1 à 7, **caractérisée en ce que** plus de 75 %, de préférence plus de 90 % des fibres continues incorporées dans le non-tissé de fibres ou le tissu de fibres s'étendent de manière à être parallèles les unes aux autres et perpendiculaires à l'orientation générale de l'assemblage bout-à-bout.

9. Pièce en composite selon l'une des revendications 1 à 8, **caractérisée en ce que** la pièce en matière plastique composite est un tube (13) ou anneau.

10. Pièce en composite selon la revendication 8, **caractérisée en ce que** la première couche (15) forme avec ledit produit semi-fini la couche extérieure de la paroi.

11. Pièce en composite selon l'une des revendications 1 à 10, **caractérisée en ce qu'**en tant que fibres, on intègre des fibres de verre, d'aramide ou de carbone, préférentiellement des fibres de carbone.

12. Pièce en composite selon l'une des revendications 1 à 11, **caractérisée en ce que** ledit produit semi-fini présente une épaisseur comprise entre 0,05 et 1 mm, de préférence entre 0,1 et 0,5 mm et, avec une préférence particulière, entre 0,15 et 0,4 mm.

13. Pièce en composite selon l'une des revendications 1 à 12, **caractérisée en ce que** ledit produit semi-fini est une tôle organique.

14. Pièce en composite selon l'une des revendications 1 à 13, **caractérisée en ce que** l'assemblage bout-à-bout présente, dans une direction perpendiculaire à l'assemblage bout-à-bout (21), une résistance à la traction qui est augmentée d'au moins 30 pour cent, préférentiellement d'au moins 50 pour cent et, avec une préférence particulière, d'au moins 70 pour cent, par rapport à un assemblage bout-à-bout sensiblement droit.
